# EUROPEAN PATENT SPECIFICATION

(11) **EP 1 127 454 B1**
(45) Date of publication and mention of the grant of the patent: **08.03.2006**
(21) Application number: 99953841.6
(22) Date of filing: 12.10.1999
(51) Int. Cl.: H04N 3/15

(54) **Imaging device using Time Delay Integration and radiation hit counts**
Bildgerät mit Time Delay Integration und Strahlungstrefferzahlen
Dispositif d'imagerie utilisation "Time Delay Integration" et comptage de manifestation de radiation

(30) Priority: 05.11.1998 GB 9824276
(43) Date of publication of application: 29.08.2001
(73) Proprietor: Goldpower Limited, Town Tortola (VG)
(72) Inventor: SPARTIOTIS, Konstantinos, Evangelos, FIN-02150 Espoo (FI); JURTHE, Stefan, FIN-02600 Espoo (FI); ERALUOTO, Markku, Tapio, FIN-02230 Espoo (FI)
(74) Representative: McCann, Heather Alison
(86) International application number: PCT/EP1999/007783
(87) International publication number: WO 2000/028729

(56) References cited:
- WO-A-98/16853
- GB-A- 2 323 736

## Description

This invention relates to an imaging device for scan-imaging radiation, and in particular, but not exclusively, to an imaging technique known as Time Delay Integration (TDI).

Imaging devices comprising an array of pixels of various types are known and may or may not directly allow TDI mode of operation.

Charge coupled image sensors (also known as charge coupled devices (CCDs)) form one type of known imaging device. A CCD device operates in the following way.
1. Charge is accumulated in a depletion region created by an applied voltage. For each pixel the depletion has a potential well shape and constrains electrons under one electrode gate to remain within the semiconductor substrate.
2. Voltage is applied as pulse to the electrode gate of the CCD device to clock each charge of an adjacent cell. The charge remains inside the semiconductor substrate and is clocked through, pixel by pixel, to a common input. During this process no additional charge can be accumulated.

Another type of imaging device is the Active-pixel Semiconductor Imaging Device (ASID) described in International application publication number WO95/33332 and incorporated herein by reference. The ASID comprises an array of pixels including a semiconductor substrate having an array of detector cells and a further array of pixel circuits. The detector cells generate charge in response to incident radiation. Each pixel circuit associated with a respective detector cell accumulates charge resulting from plural radiation hits of the associated detector cell. At determined times the charge from the pixel circuits can be read out and used to generate an image based on the analogue charge values stored in each pixel circuit.

A further type of imaging devices are photon counting devices (PCD) described in International application publication number WO98/16853. The PCD comprises an array of pixels including a semiconductor substrate having an array of detector cells and a further array of pixel circuits. The detector cells generate charge in response to incident radiation. Each pixel circuit comprises a discriminator registering radiation hits of a preferred energy range for a respective detector cell, and an n-bit digital counter and an n-bit loadable shift-register.

The PCD works in the following way.
1. The number of registered radiation hits in the associated detector cell is counted into the n-bit digital counter.
2. In response to an external request the value of the counter is loaded into the n-bit shift register and the value of the counter is cleared.
3. All shift-registers of the entire sensor are chained and the information is clocked out in a serial fashion. Steps 1 and 3 can be executed simultaneously.

Of the afore-mentioned imaging techniques only CCD devices have been used in a TDI mode of operation since charge-shifting is an inherent feature of CCD technology.

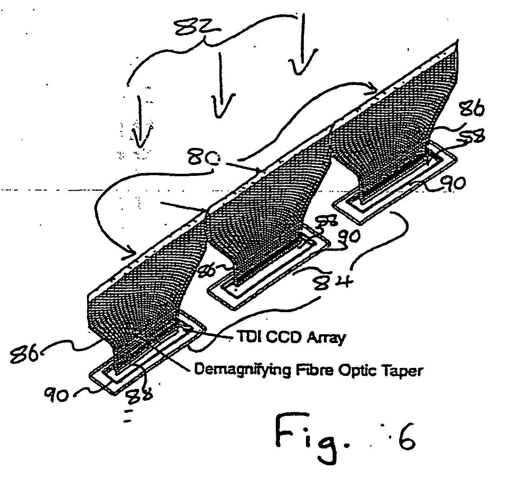

Referring to Figure 6, there will now be described a TDI CCD detector and the operation of such a detector.

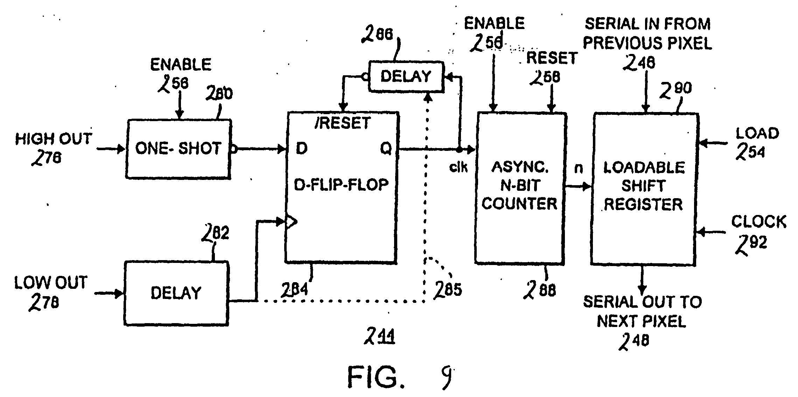

Since CCDs are sensitive only to visible light, a scintillator 80, such as a phosphor, for converting high energy radiation, such as X-rays 82, into visible light must be placed in front of the CCD device 84. The scintillator 80 is generally composed of a strip of phosphor material, and is coupled to a fibre optic taper 86, which is bonded to the active region 88 of the CCD device 84. Three fibre optic tapers 86 respectively bonded to three CCD devices 84 are illustrated in Figure 9. The fibre optic tapers 86 de-magnify light collection to provide space at the taper outputs to accommodate the outer non-active regions of the CCD devices 84, yet still maintain an acceptable light collection efficiency.

In a TDI mode, image acquisition takes place by scanning a continuously active X-ray beam across an object, such as a breast for mammography applications, and correspondingly moving the detector across the object, typically at the same scanning speed as the X-ray beam. Charge collected in CCD pixels is shifted down the columns of the CCD devices 84 at a rate equal to, but in an opposite direction to, the scanning X-ray beam. The charge packets collected at the end of the CCD columns have effectively remained stationary with respect to a given path of X-rays through the object, and they comprise the integral of several charge packets in the CCD column. This is because the sensor remains active at all times and the total pixel charge on the image comes from integrating charge from multiple pixel cells as the total charge is clocked along one column. The collected charge packets are read out and typically digitised for processing into suitable images.

TDI mode imaging advantageously provides good total energy levels of imaging radiation and correspondingly good stability, yet from relatively low overall X-ray illumination. Thus, providing good imaging whilst reducing the inherent danger from high power X-ray illumination.

However, CCD imagers require indirect conversion of X-rays to light, and thus have limited absolute sensitivity and resolution. Direct radiation to electron converting substrates cannot be connected to a CCD because the small pixel charge capacity of CCDs saturates at very low doses of radiation, and cannot cope with the large currents provided by direct conversion.

The present invention seeks to mitigate the problems described in the prior art and embodiments provide a TDI imaging device not using a CCD.

In accordance with a first aspect of the invention there is provided an imaging device in accordance withe claim 1.

Preferred embodiments of the invention provide for TDI mode imaging using detectors other than CCD devices, thereby avoiding the inherent - drawbacks of such devices, and such arrangements provide for the use of photon counting devices in TDI mode imaging.

The accumulation circuitry modifies, typically increases, the loaded pixel image value in accordance with radiation incident on said detector. In a preferred embodiment the pixel circuit comprises transfer circuitry responsive to a control signal to transfer a pixel image value to a succeeding pixel circuit and to load a pixel image value from a preceding pixel circuit. Thus pixel image values representing radiation incident from a corresponding pixel element of an illuminated object can be accumulated and transferred along the pixel cell array, in order to track radiation originating from that pixel element.

Preferably, the accumulation circuitry further comprises threshold circuitry coupled to receive signals generated in said associated detector cell and having values dependent on incident radiation energy, said counting circuitry being coupled to said threshold circuitry for counting radiation hits within a predetermined energy range or ranges.

More preferably, the transfer circuitry comprises a loadable register coupled to said counting circuitry for receiving a count value therefrom, and further couplable to respective loadable registers associated with said succeeding and preceding pixel circuits for receiving and forwarding count values to and from said succeeding and preceding circuits respectively. Typically, the loadable register is a shift register.

Advantageously, the counting circuitry and loadable register comprise logic circuitry configured as a unitary element operable as the counting circuitry and the loadable register, which takes up less area on the pixel circuit substrate.

In a second aspect of the invention a preferred embodiment comprises a scanning imaging system in accordance with claim 11 comprising an imaging device as described above, control electronics for reading image information from said imaging device and processing said imaging information for display, and display means for displaying said processed information. Suitably, the system comprises support means for said imaging device and said high energy radiation source and adapted to move said imaging device and high energy radiation source to an object disposed between said imaging device and high energy radiation source. Optionally, the object may move relative to the radiation source and imaging device.

In a third aspect of the invention there is provided a method in accordance with claim 14.

Exemplary embodiments of the invention will be described hereinafter, by way of example only, with reference to the accompanying drawings in which like elements have like numbers and in which:
Figure 1 is a schematic block diagram of an overall scan-imaging system configuration;
Figure 2 is a cross section of one example of a pixel array;
Figure 3 is a schematic block diagram of a digital implementation of a pixel circuit of the imaging device in Figure 2;
Figure 4 is an alternative example of the counter/shift register circuitry of the pixel circuit of Figure 3;
Figure 5 is a readout configuration of an array of digital pixel circuits;
Figure 6 is a schematic illustration of a conventional TDI CCD detector;
Figure 7 is a schematic illustration of an implementation of circuitry for counting plural radiation hits;
Figure 8 is a more detailed schematic illustration of the counting circuitry shown in Figure 7;
Figure 9 is a schematic illustration of circuitry for counting radiation hits within a predetermined energy range; and
Figure 10 is a schematic illustration of further circuitry for counting radiation hits within a predetermined energy range.

Embodiments of the invention are arranged to use digital (photon count) accumulation and transfer when implemented with PCD pixel circuits, such pixel circuits being integrated using a standard wafer process (e.g. CMOS, NMOS, BICMOS) as well as future wafer processes.

In such a digital implementation the pixel cell circuit comprises a discriminator responding with a pulse to a radiation hit of a desired energy threshold or range in the respective detector cell, an n-bit counter and an n-bit shift register. The inputs and outputs of the shift register are connected to the preceding and succeeding pixel circuit respectively forming a chain e.g. along one column. The counter and shift register can load in parallel from each other upon controls signals.

The TDI mode of operation in an array consisting of such cells can work in the following way:
1. Count values corresponding to radiation hits of the desired energy incident on the associated detector cell are added to the content of the counter.
2. The shift register loads the value from the counter and serial shifts it into the register of the succeeding cell circuit.
3. The counter is loaded with a value from a preceding cell circuit from the shift register.

During step 2 and 3 no radiation hits can be registered, thus, the pixel is inactive but the ration of inactive to active time may be better than 1 to 100.

From the last pixel circuit in a column the value can be read out and used to generate an image based on counted photons.

A more detailed description of embodiments of the invention will now be described.

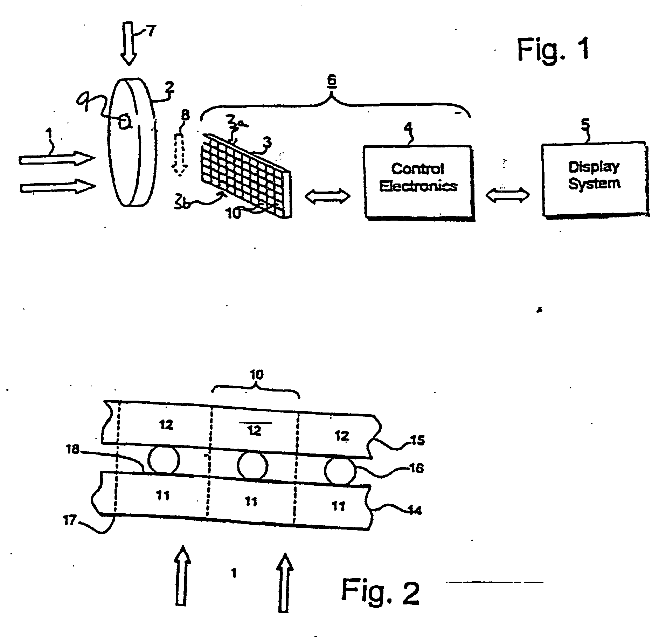

Figure 1 is a schematic block diagram of one example of a scan-imaging system using an imaging device 6 in accordance with an embodiment of the present invention. This particular example is directed to the imaging of high energy radiation, e.g. X-ray radiation. However, it will be clear to persons of ordinary skill in the art that other radiation such as gamma radiation, alpha radiation or beta radiation for example may be used.

The imaging system of Figure 1 is shown to provide imaging of an object 2 moving at scanning speed Vₒₚₜ 7 with respect to the pixel array 3 and subjected to radiation 1. The system of Figure 1 is shown with a moving object 2 in order to simplify and aid the clarity of the description of embodiments of the invention. Conventionally, the object, particularly, if it is part of the human body, is static and the X-ray source and detector move relative to the object. Persons of ordinary skill in art will readily understand the principles described hereinafter and can adapt them for static objects. In this example the radiation 1 is X-ray radiation and the object 2 part of a human body. The pixel array 3 comprises a plurality of pixels 10 arranged in two dimensions. However, it will be appreciated that other embodiments may have a different configuration (e.g. a strip arrangement).

Conceptually, a region of the object 2 may be considered to be a pixel element 9. Radiation impinging on pixel element 9 irradiates an area of pixel 3 corresponding to a pixel. As the object 2 moves relative to the pixel array 3 so the radiation corresponding to pixel element 9 impinges on succeeding pixels.

The imaging device directly detects incident X-ray radiation and accumulates at each pixel a pixel image value representing incident radiation from a corresponding pixel element 9 which moves from pixel to pixel cell 10, e.g. in a row by row fashion, with a speed V_{TDI} 8 which may be the same as V_{OPT}. The pixel image value starts with a value zero at the side 3a of the pixel array where the moving object 2 enters the field of view of the pixel array 3, and is read out after it reaches the opposing side 3b of the pixel array 3 where the object leaves the field of view. As a pixel image value moves through the pixel array 3 it accumulates a plurality of radiation hits corresponding to one point of interest on the moving object 2 rather than to one pixel on the pixel array.

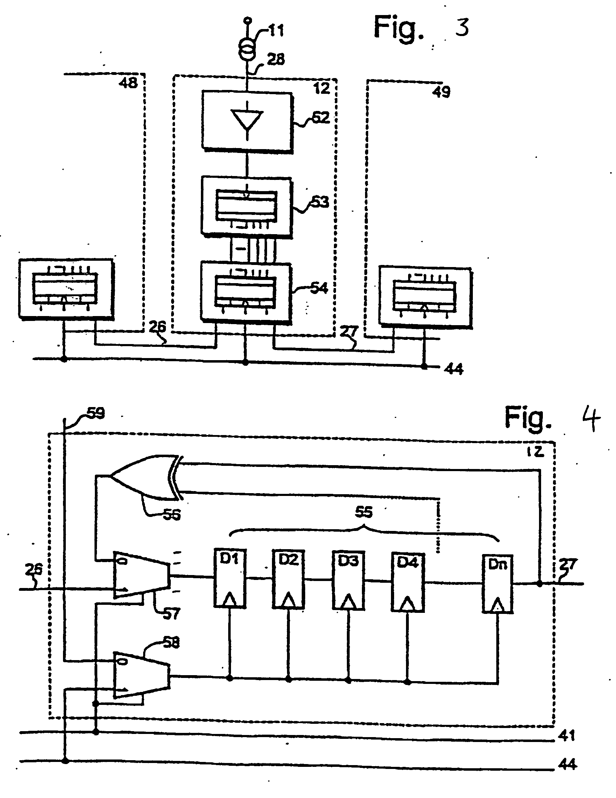

Referring now to Figure 2, the pixel array 3 can be configured on a single semiconductor substrate (e.g. Silicon) with each pixel cell 10 comprising a detector cell 11 and a pixel circuit 12. Alternatively, the pixel array 3 can be configured on two substrates, one with an array of detector cells and one with an array of corresponding pixel circuits, the substrates being mechanically and electrically connected by, for example, conventional bump-bonding technology or any other appropriate technology.

Figure 2 shows a schematic cross section of part of a pixel array 3. In this example, the pixel array 3 comprises a detector substrate 14 connected to a circuit substrate 15 by means of bump-bonds 16. A detector cell 11 of each pixel 10 is defined on the detector substrate 14 by a continuous electrode 17 which applies a biasing voltage and pixel location electrodes 18 to define a detection zone for the pixel 10. Corresponding pixel circuits 12 are electronically connected to the corresponding electrodes 18 by bump-bonds 16. In this manner, when charge is generated in a detector cell 11 in response to incident radiation 1, the charge is passed via bump-bond 16 to the corresponding pixel circuit 12.

The actual size of the pixel cell will depend on the application for which the imaging device is intended, and will also depend on the integrated circuit technology available for constructing the pixel circuit 12 to be described later. With current technology, it is not possible to obtain the smallest possible pixel cell sizes which would be required in some applications. Typically, the minimum pixel cell size is of the order 100µm square using current technology which is suitable for most diagnostic and dental imaging applications, However, with advances expected in circuit manufacturing technology it is expected that the minimum size can be significantly reduced.

Accordingly, the present invention is not limited to any particular pixel cell size.

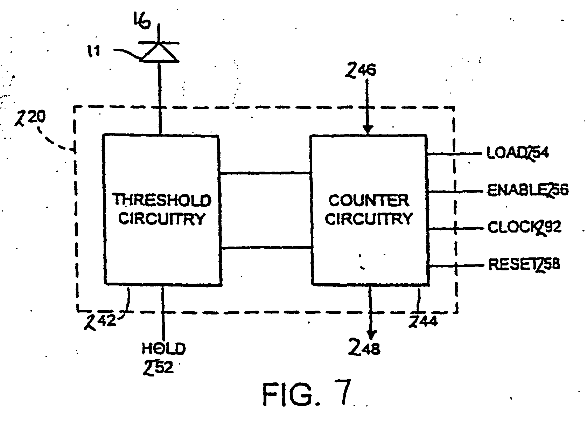

Any appropriate semiconductor material can be used for the substrates. For example, silicon may be used for the detector substrate and for the circuit substrate. Other materials could be used, e.g. the detector material could be selected from: CdZnTe, CdTe, HgI₂, InSb, GaAs, Ge, TIBr, Si and PbI₂. The detector substrate need not be limited to direct conversion materials, but could comprise CMOS circuits, on a silicon substrate, and comprising photo-diodes for receiving light from a scintillator. Optionally, amorphous silicon can be used in conjunction with a scintillator screen and pixel circuitry including an active pixel circuit 120 as described hereinafter with reference to Figure7.

Figure 3 is a schematic illustration of a block diagram for a digital embodiment of a pixel circuit 12 of the imaging device in Figure 2. The pixel circuit 12 comprising a discriminator 52, an n-bit counter 53 and a n-bit shift register 54 providing a serial connection to a preceding 48 and succeeding 49 pixel circuit. The detector 11 is shown simplified as a radiation controlled current source.

When a photon is photo-absorbed in the detection zone of the detector cell 11 creating electrical charge, or when particle radiation ionises a detection zone of the detector cell 11, an electric charge flows into the pixel circuit through input 28. In response to a radiation hit of the desired energy range (e.g. excluding scattered radiation) the discriminator 52 produces a single pulse to be added to the value in the counter 53. The counter value is representative of pixel luminance or radiation energy incident for that pixel.

Referring to Figure 3, under the control of control signals (not shown) the shift register 54 is loaded in parallel with the value from the counter 53. By applying n clock cycles via the clock signal 44 the count value is serial shifted to the succeeding pixel circuit 49 over connection 27. A following control impulse loads a count value, shifted into register 54 from the preceding circuit 48, into the counter 53 and the new radiation hits are accumulated and added to the value in the counter 53. For the time of the transfer cycle, i.e. transfer of count value from preceding and to succeeding circuits, the detector is inactive. However, the active time may be more than 100 times greater than the transfer time and thus the inactive period does not significantly adversely affect the operation of the detector.

The implementation of the loadable counter 53 and the loadable shift register 54 in each pixel circuit requires a considerable amount of semiconductor area. Therefore, a more efficient alternative is now described with reference to Figure 4.

Figure 4 shows a further embodiment implementing a counter and shift register with only an n-bit shift register 55 shown in Figure 4 comprising n D type flip-flops, two multiplexers and one XOR-gate with 2 or more inputs. The circuitry shown in Figure 4 functions as follows.
1) When the control signal 41 is at state 0 the input of the shift register 55 is an XOR combination of 2 or more flip-flop states (tabs of the shift register 55) and where the discriminator signal 59 output from the discriminator 52 provides the clocking signal. In this configuration, the shift register 55 works as a pseudo-random number generator in which up to 2" -1 different combinations (2" for a binary counter) of the register value are possible dependent on the position of the tabs.
2) When the control signal 41 is at state 1 the input of the shift register 55 of pixel circuit 12 is connected to the output 26 of the shift register of the preceding pixel circuit 48, and all registers are clocked by the clock signal 44. The control signal 41 stays 1 for n clock periods of the clock signal 44 ensuring complete transfer of the counter value to the next pixel circuit. Evidently, the shift register 55 cannot be updated by discriminator signal 59 during transfer of count values from and to respective preceding 48 and succeeding 49 pixel circuits.

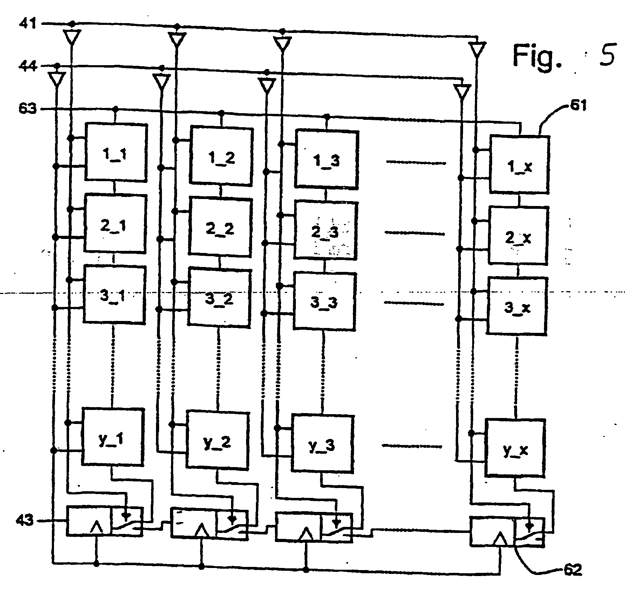

Figure 5 is a schematic illustration of an x by y array of digital pixel circuits. If binary counters are used in the pixel circuits then the inputs of the first row of pixel circuits 1_1...1_n (signal 63) are connected to logical 0 to provide an initial counter value of 0. If the counter described with reference to circuit as Figure 4 is used, the input is a logical 1 giving an initial counter value of 111 ... 1 since a starting value of 0 would dead lock the pseudo random number generator used as a counter is the circuitry illustrated in Figure4.

The outputs of the pixel circuits m_1...m_n in the last row of the array of Figure 5 are connected to an n-bit shift register 62 which ensures that no transfer from the pixel cells between rows occurs. Individual outputs are connected in series over the entire row so as to serial shift out all the row values in the last row through line 43 out of the pixel array during the time period.

Referring now to Figure 7 there is illustrated a diagram of an individual pixel circuit 220 suitable for implementing the counter 53 of Figure 3. The pixel detector 19 is represented by the diode 11 in Figure 3. The threshold circuitry 242 effectively filters input radiation intensity by comparing the input pulse peak to one or more threshold values. The output of the threshold circuitry 242 is connected to counter circuitry 244 for counting pulses (radiation hits) within one or more predetermined ranges as defined by the threshold circuitry. The counter circuitry is connected to the shift register 54 and the shift registers of other adjacent pixel circuits for readout and counter transfer purposes. Various inputs to the pixel circuit 220 include hold 252, load 254, enable 256, reset 258 and clock 292 signal lines and voltage supply lines Vdd and Vss (not shown).

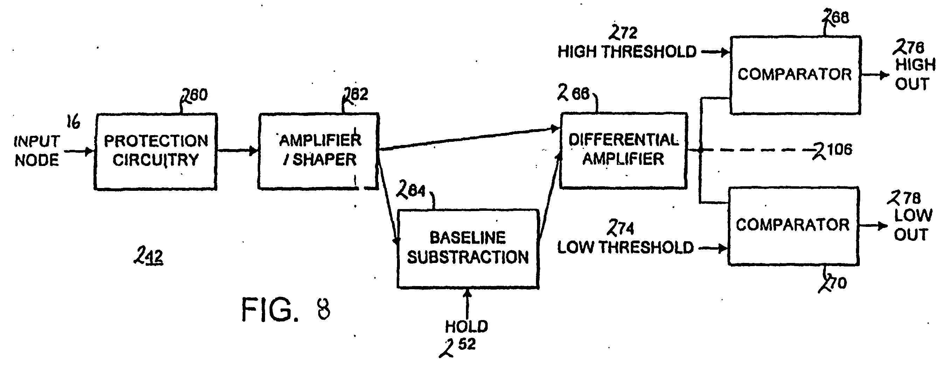

Figure 8 is a schematic block diagram of the threshold circuitry 242 represented in Figure 7. As shown in Figure 8, protection circuitry 260 is connected to the input node 16 (i.e. the bump-bond connection 234 to the pixel detector 19). The protection circuitry is provided to percent damage due to over-or-under-voltage values and is typically provided by two diodes connected to the high and low supply line Vdd and Vss (not shown). The output of the protection circuitry 260 is connected to amplifier shaper circuitry 262 which produces an analogue signal proportional to the charge injection of a delta peak. Preferably the amplifier shaper 262 is implemented by means of a charge sensitive amplifier followed by a shaper. The shaping time depends on the maximum signal rate on a pixel. Figure 8 illustrates optional baseline subtraction circuitry which is needed if the leakage current varies significantly within the selected shaping time. Optionally, one can select the time when the baseline is sampled. In this case, the baseline is sampled outside normal measurement times.

A differential amplifier 266 subtracts the baseline so that comparators 268 and 270 see the true peak signal height. First and second comparators 268 and 270 have respective high and low threshold values 272 and 274 input thereto. The high and low threshold values can represent higher and lower limits of accepted signal amplitudes. In this case any signal peaks below the low threshold and above the high threshold will be rejected by the counter circuitry 244. If the peak signal value exceeds the high threshold value 272, then the first comparator 268 outputs a logic 1, otherwise it outputs a logic 0.

Similarly, if the peak signal value exceeds the low threshold value 274, then the second comparator 270 outputs a logic 1, otherwise it outputs a logic 0. It will be appreciated that the comparison output values of the present embodiment form one example only and in other embodiments of the invention values could be output as a result of the comparisons.

Figure 9 is a schematic block diagram of a first example of counter circuitry 244. Depending on the shaping parameters and signal amplitudes, the high output signal 276 from the first comparator 268 always comes some time later than the low output 278 from the second comparator 270. In Figure 9, the high output 276 from the first comparator 268 is supplied to a one shot circuit 280 which is responsive to the enable signal 256. The low output 278 from the second comparator 270 is supplied to a delay circuit 282. By applying a delay to the low output 278, the order of the signals 276 and 278 can be reversed so that the signal received from the delay circuit 282 at the clock input C of a Dflip-flop 284 always comes later than the inverted output of the one-shot circuit 280 which is supplied to the D input of the flip-flop 284. If the high threshold 272 was not exceeded by the input signal, the output Q of the flip-flop 284 will be set high. The output Q of the flip-flop 284 is connected via a delay 286 to a reset input RESET of the flip-flop 284 to cause the flip-flop to be reset after a delay D2 to ensure a minimum pulse length for the output "clk" signal from the Q output of the flip-flop 284. An alternative to feeding back the output Q to the delay 286 is represented by the dotted line 285 from the delay circuit 282. Although a D-flip-flop 284 is shown in Figure 9, another type of flip-flop could be used.

The length of the single-triggered one-shot circuit 280 is adequate to coincide with the rising edge from the low output signal 278 from the second comparator 270 at all signals amplitudes.

The output "clk" from the output Q of the flip-flop 284 is provided as an input to an asynchronous n-bit counter 288. According to the type of counter used, counting can be disabled with an enable signal 256 before latching an n-bit output from the counter 288 to a loadable shift register 290. The counter 288 can then be reset and the counter 288 can be enabled to proceed with counting. Reading from the pixel circuit can then be effected during the next counting period in response to the clock signal 292.

The overall operation of the triggered counter arrangements shown in Figure 9 is to cause a count to be accumulated in the counter 288 on each occasion that a signal is received in response to a radiation hit having an energy between the high and low threshold values 272 and 274.

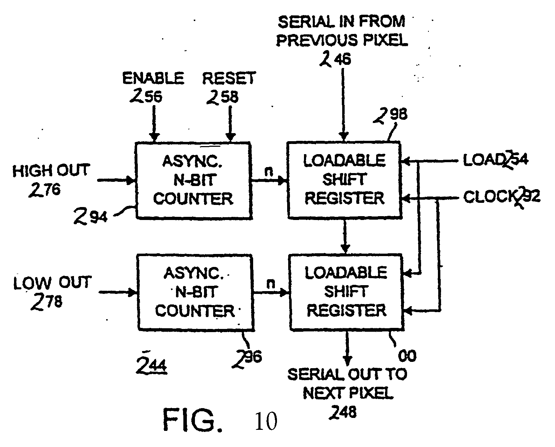

An alternative arrangement for the counter circuitry is illustrated in Figure 10. In the alternative counter circuitry shown in Figure 10, both low and high output counts are directly obtained. The circuitry requires more circuit real estate and readout time then the circuitry of Figure 8, but it does allow a direct readout of the number of counts between the thresholds by subtracting the low count from the high count and also allows the output of the number of the counts higher than the high threshold by counting the high count only.

In Figure 10, therefore, an asynchronous n-bit counter 294 is connected directly to receive the high output of the first comparator 268. An asynchronous n-bit counter 296 is connected directly to receive the output 278 of the second comparator 270. In response to bad signals 254, first and second loadable shift registers 298 and 200 can be loaded with the contents of the first and second asynchronous n-bit counters 294 and 296, respectively. As with the previous example, the contents of the loadable shift registers 298 and 200 can be transferred to a succeeding pixel circuit, and be loaded with the contents of a preceding pixel circuit shift register for initialising the counters.

In view of the foregoing description it will be evident to a person skilled in the art that various modifications may be made within the scope of the invention. For example, although specific embodiments of the invention have been described with reference to Mammography, embodiments of the invention may also be used in chest x-ray radiography, Dental Panoramic Tomography and Non Destructive Testing and Evaluation, for example. Additionally, the object need not move, but the radiation source and detector can move. This is particularly important for scanning parts of the human body, and in tomography the linear speed of the radiation source may not be matched by the linear TDI speed, i.e. speed of charge transfer, since it is the angular velocity of radiation source and the TDI speed which is to be kept constant. Although digital embodiments of the invention have been described with reference to serial coupled shift registers; it will be evident to a person of ordinary skill that the shift registers may be coupled in parallel.

## Claims

1. An imaging device (6) for imaging radiation, the imaging device comprising an image cell array (3) including an array of detector cells (11) for generating charge in response to incident radiation and a corresponding array of pixel circuits (12) comprising accumulation circuitry (52, 53, 54) for accumulating pixel image values corresponding to incident radiation on respective detector cells, each pixel circuit being associated with a respective detector cell, wherein said accumulation circuitry comprises counting circuitry (53) for counting plural radiation hits incident on said associated detector cell, and said pixel image value comprises a count value of said hits, **characterised in that**:
the imaging device is adapted for scan imaging radiation in a Time Delay Integration (TDI) mode, and each pixel circuit is controllable to transfer a pixel image value to an adjacent pixel circuit (49), said pixel circuit being operable to receive a pixel image value from an adjacent pixel circuit (48).

2. An imaging device according to claim 1, wherein said accumulation circuitry comprises threshold circuitry (52) coupled to receive charge generated in said associated detector cell and having values dependent on incident radiation energy, said counting circuitry being coupled to said threshold circuitry for counting radiation hits within a predetermined energy range or ranges.

3. An imaging device according to claim 1 or 2, comprising transfer circuitry comprising a loadable register (54) couplable to said counting circuitry for receiving a count value therefrom, and further couplable to respective loadable registers associated with succeeding and preceding pixel circuits for receiving and forwarding count values from and to said succeeding and preceding circuits respectively.

4. An imaging device according to claim 3, wherein said loadable register is couplable to said counting circuitry for loading said counting circuitry with a count value from said preceding circuit.

5. An imaging device according to claim 3 or 4, wherein said loadable register is a shift register.

6. An imaging device according to any one of claims 3 to 5, wherein said counting circuitry and loadable register comprise logic circuitry configured as a unitary element operable as said counting circuitry and said loadable register.

7. An imaging device according to any preceding claims, controllable to transfer said count value or pixel image value between pixel circuits of adjacent rows of said array of pixel circuits at a speed V_{TDI} = pixel row spacing multiplied by a transfer frequency.

8. An imaging device according to claim7, adapted to read said count value or pixel image from a last row (43) of said array of pixel circuits at a frequency at least equal to said transfer frequency multiplied by the number of pixel circuits in said row.

9. An imaging device according to any preceding claim, wherein said detector cells comprise a direct-conversion material for directly converting incident radiation into charge.

10. An imaging device according to any preceding claim, wherein said detector cells are sensitive to high energy radiation such as X-rays, and/or gamma rays, and/or alpha rays, and/or beta rays.

11. A scanning imaging system comprising an imaging device according to any preceding claim, and further comprising control electronics (4) for controlling said device and reading image information from said imaging device, a processor for processing said image information for display, and display means (5) for displaying said processed information.

12. A scanning imaging system according to claim 11, further comprising a high energy radiation source (1) disposed confronting said imaging device.

13. A scanning imaging system according to claim12, further comprising support means for said imaging device and said high energy radiation source and adapted to move said imaging device and high energy radiation source relative to an object disposed between said imaging device and high energy radiation source.

14. A method of operating an imaging device (6) in a scan-imaging Time Delay Integration (TDI) mode, said imaging device comprising an image cell array including an array (3) of detector cells (11) for generating charge in response to incident radiation and a corresponding array of pixel circuits (12) comprising accumulation circuitry (52, 53, 54) for accumulating pixel image values corresponding to incident radiation on respective detector cells, each pixel circuit being associated with a respective detector cell and controllable to transfer a pixel image value to an adjacent pixel circuit, said method comprising:
(i) determining said charge fulfilling a predetermined criterion and correspondingly triggering said counting circuitry for counting radiation hits within a predetermined energy range or ranges; and
(ii) receiving a pixel image value from an adjacent pixel circuit (48).

15. A method according to claim 14, comprising transferring a count value to a succeeding pixel circuit and receiving a count value from a preceding pixel circuit.

16. A method according to claim 15, comprising initialising said count circuitry with said received count value, and increasing said count value in accordance with incident radiation.

17. A method according to any one of claim 14 to claim 16, comprising transferring a pixel image value from said pixel circuit to an adjacent pixel circuit.

18. A method according to any one of claim 14 to claim 17 comprising modifying a received pixel image value in accordance with radiation incident on said associated detector cell.

## Patentansprüche

1. Abbildungsvorrichtung (6) zum Abbilden von Strahlung, wobei die Abbildungsvorrichtung eine Bildzellenmatrix (3) umfasst, welche eine Matrix von Detektorzellen (11) zum Erzeugen von Ladung als Reaktion auf eine einfallende Strahlung und eine entsprechende Matrix von Pixelschaltungen (12) aufweist, welche eine Akkumulationsschaltungsanordnung (52, 53, 54) zum Akkumulieren von Pixelbildwerten, welche einer einfallenden Strahlung auf jeweiligen Detektorzellen entsprechen, umfassen, wobei jede Pixelschaltung einer jeweiligen Detektorzelle zugeordnet ist, die Akkumulationsschaltungsanordnung eine Zählschaltungsanordnung (53) zum Zählen von mehreren Strahlungstreffern, die auf der zugeordneten Detektorzelle einfallen, umfasst, und der Pixelbildwert einen Zählwert dieser Treffer umfasst, **dadurch gekennzeichnet, dass**:
die Abbildungsvorrichtung zur Abtastabbildung von Strahlung in einer Betriebsart mit Zeitverzögerungsintegration (TDI) ausgelegt ist, und jede Pixelschaltung gesteuert werden kann, um einen Pixelbildwert an eine benachbarte Pixelschaltung (49) zu übertragen, und jede Pixelschaltung betrieben werden kann, um einen Pixelbildwert von einer benachbarten Pixelschaltung (48) zu empfangen.

2. Abbildungsvorrichtung nach Anspruch 1, wobei die Akkumulationsschaltungsanordnung eine Schwellenwertschaltungsanordnung (52) umfasst, die angeschlossen ist, um Ladung zu empfangen, welche in der zugeordneten Detektorzelle erzeugt wird und Werte aufweist, die von der einfallenden Strahlungsenergie abhängen, und die Zählschaltungsanordnung mit der Schwellenwertschaltungsanordnung zum Zählen von Strahlungstreffern innerhalb eines vorbestimmten Energiebereiches oder von vorbestimmten Energiebereichen verbunden ist.

3. Abbildungsvorrichtung nach Anspruch 1 oder 2, welche eine Übertragungsschaltungsanordnung umfasst, die ein ladbares Register (54) umfasst, das mit der Zählschaltungsanordnung zum Empfangen eines Zählwerts davon verbunden werden kann und ferner mit jeweiligen ladbaren Registern verbunden werden kann, die mit nachfolgenden oder vorhergehenden Pixelschaltungen zum Empfangen und Weiterleiten von Zählwerten von und zu den nachfolgenden beziehungsweise vorhergehenden Schaltungen verbunden sind.

4. Abbildungsvorrichtung nach Anspruch 3, wobei das ladbare Register mit der Zählschaltungsanordnung zum Laden der Zählschaltungsanordnung mit einem Zählwert von der vorhergehenden Schaltung verbunden werden kann.

5. Abbildungsvorrichtung nach Anspruch 3 oder 4, wobei das ladbare Register ein Schieberegister ist.

6. Abbildungsvorrichtung nach einem der Ansprüche 3 bis 5, wobei die Zählschaltungsanordnung und das ladbare Register eine logische Schaltungsanordnung umfassen, die als ein Einheitselement ausgelegt ist, das als die Zählschaltungsanordnung und das ladbare Register betrieben werden kann.

7. Abbildungsvorrichtung nach einem der vorhergehenden Ansprüche, welche so gesteuert werden kann, dass sie den Zählwert oder Pixelbildwert zwischen Pixelschaltungen von benachbarten Reihen der Matrix von Pixelschaltungen mit einer Geschwindigkeit von V_{TDI} = Pixelreihenabstand multipliziert mit einer Übertragungsfrequenz überträgt.

8. Abbildungsvorrichtung nach Anspruch 7, die so ausgelegt ist, dass sie den Zählwert oder das Pixelbild von der letzten Reihe (43) der Matrix von Pixelschaltungen bei einer Frequenz liest, die wenigstens gleich der Übertragungsfrequenz multipliziert mit der Anzahl von Pixelschaltungen in der Reihe ist.

9. Abbildungsvorrichtung nach einem der vorhergehenden Ansprüche, wobei die Detektorzellen ein Direktumwandlungsmaterial zum direkten Umwandeln von einfallender Strahlung in Ladung umfassen.

10. Abbildungsvorrichtung nach einem der vorhergehenden Ansprüche, wobei die Detektorzellen für energiereiche Strahlung, wie beispielsweise Röntgenstrahlen und/oder Gammastrahlen und/oder Alphastrahlen und/oder Betastrahlen empfänglich sind.

11. Abtastabbildungssystem, umfassend eine Abbildungsvorrichtung gemäß einem der vorhergehenden Ansprüche und ferner umfassend eine Steuerelektronik (4) zum Steuern der Vorrichtung und Lesen von Bildinformation von der Abbildungsvorrichtung, einen Prozessor zum Verarbeiten der Bildinformation zur Anzeige und Anzeigemittel (5) zum Anzeigen der verarbeiteten Information.

12. Abtastabbildungssystem nach Anspruch 11, welches ferner eine Quelle (1) energiereicher Strahlung umfasst, die der Abbildungsvorrichtung gegenüberstehend angeordnet ist.

13. Abtastabbildungssystem nach Anspruch 12, welches ferner Tragmittel für die Abbildungsvorrichtung und die Quelle energiereicher Strahlung umfasst und zum Bewegen der Abbildungsvorrichtung und der Quelle energiereicher Strahlung in Bezug auf ein Objekt, das zwischen der Abbildungsvorrichtung und der Quelle energiereicher Strahlung angeordnet ist, ausgelegt ist.

14. Verfahren zum Betreiben einer Abbildungsvorrichtung (6) in einer Betriebsart der Abtastabbildung mit Zeitverzögerungsintegration (TDI), wobei die Abbildungsvorrichtung eine Bildzellenmatrix umfasst, welche eine Matrix (3) von Detektorzellen (11) zum Erzeugen von Ladung als Reaktion auf eine einfallende Strahlung und eine entsprechende Matrix von Pixelschaltungen (12) aufweist, welche eine Akkumulationsschaltungsanordnung (52, 53, 54) zum Akkumulieren von Pixelbildwerten, welche einer einfallenden Strahlung auf jeweiligen Detektorzellen entsprechen, umfassen, wobei jede Pixelschaltung einer jeweiligen Detektorzelle zugeordnet ist und zur Übertragung eines Pixelbildwerts an eine benachbarte Pixelschaltung gesteuert werden kann, wobei das Verfahren umfasst:
(i) Bestimmen der Ladung, welche ein vorbestimmtes Kriterium erfüllt, und entsprechendes Auslösen der Zählschaltungsanordnung zum Zählen von Strahlungstreffern innerhalb eines vorbestimmten Energiebereichs oder von vorbestimmten Energiebereichen; und
(ii) Empfangen eines Pixelbildwerts von einer benachbarten Pixelschaltung (48).

15. Verfahren nach Anspruch 14, welches das Übertragen eines Zählwerts an eine nachfolgende Pixelschaltung und das Empfangen eines Zählwerts von einer vorhergehenden Pixelschaltung umfasst.

16. Verfahren nach Anspruch 15, welches das Initialisieren der Zählschaltungsanordnung mit dem empfangenen Zählwert und Erhöhen des Zählwerts gemäß einer einfallenden Strahlung umfasst.

17. Verfahren nach einem der Ansprüche 14 bis 16, welches das Übertragen eines Pixelbildwerts von der Pixelschaltung an eine benachbarte Pixelschaltung umfasst.

18. Verfahren nach einem der Ansprüche 14 bis 17, welches das Modifizieren eines empfangenen Pixelbildwerts gemäß einer Strahlung, welche auf der verbundenen Detektorzelle einfällt, umfasst.

## Revendications

1. Dispositif d'imagerie (6) destiné à former en image un rayonnement, le dispositif d'imagerie comportant un réseau de cellules d'image (3) comprenant un réseau de cellules détectrices (11) destinées à engendrer une charge en réponse à un rayonnement incident et un réseau correspondant de circuits de pixels (12) comprenant des circuits d'accumulation (52, 53, 54) destinés à accumuler des valeurs d'images de pixels correspondant à un rayonnement incident sur les cellules détectrices respectives, chaque circuit de pixel étant associé à une cellule détectrice respective, où lesdits circuits d'accumulation comprennent des circuits de comptage (53) destinés à compter une pluralité de coups de rayonnement incidents sur ladite cellule détectrice associée, et ladite valeur d'image de pixel comprend une valeur de comptage desdits coups, **caractérisé en ce que** le dispositif d'imagerie est conçu pour former en image par balayage un rayonnement dans un mode à intégration à retard dans le temps (TDI), et chaque circuit de pixel peut être commandé pour transférer une valeur d'image de pixel vers un circuit de pixel adjacent (49), ledit circuit de pixel pouvant être mis en oeuvre pour recevoir une valeur d'image de pixel provenant d'un circuit de pixel adjacent (48).

2. Dispositif d'imagerie selon la revendication 1, dans lequel lesdits circuits d'accumulation comprennent des circuits à seuil (52) reliés pour recevoir une charge engendrée dans ladite cellule détectrice associée et présentant des valeurs qui dépendent de l'énergie du rayonnement incident, lesdits circuits de comptage étant reliés auxdits circuits à seuil en vue du comptage de coups de rayonnement à l'intérieur d'une plage ou de plages d'énergies prédéterminées.

3. Dispositif d'imagerie selon la revendication 1 ou 2, comprenant des circuits de transfert comportant un registre pouvant être chargé (54) qui peut être relié auxdits circuits de comptage en vue de la réception d'une valeur de comptage depuis ceux-ci, et qui peut en outre être relié à des registres respectifs pouvant être chargés associés à des circuits de pixels suivant et précédent en vue d'une réception et d'une retransmission de valeurs de comptage depuis et vers respectivement lesdits circuits suivant et précédent.

4. Dispositif d'imagerie selon la revendication 3, dans lequel ledit registre pouvant être chargé peut être relié auxdits circuits de comptage en vue d'un chargement desdits circuits de comptage par une valeur de comptage provenant dudit circuit précédent.

5. Dispositif d'imagerie selon la revendication 3 ou 4, dans lequel ledit registre pouvant être chargé est un registre à décalage.

6. Dispositif d'imagerie selon l'une quelconque des revendications 3 à 5, dans lequel lesdits circuits de comptage et ledit registre pouvant être chargé comprennent des circuits logiques configurés sous forme d'élément unique pouvant être mis en oeuvre en tant que dits circuits de comptage et dit registre pouvant être chargé.

7. Dispositif d'imagerie selon l'une quelconque des revendications précédentes, pouvant être commandé pour transférer ladite valeur de comptage ou ladite valeur d'image de pixel entre des circuits de pixels de lignes adjacentes dudit réseau de circuits de pixels à une vitesse V_{TDI} = l'espacement entre les lignes de pixels multiplié par une fréquence de transfert.

8. Dispositif d'imagerie selon la revendication 7, conçu pour lire ladite valeur de comptage ou image de pixel à partir d'une dernière ligne (43) dudit réseau de circuits de pixels à une fréquence au moins égale à ladite fréquence de transfert multipliée par le nombre de circuits de pixels de ladite ligne.

9. Dispositif d'imagerie selon l'une quelconque des revendications précédentes, dans lequel lesdites cellules détectrices comprennent un matériau à conversion directe destiné à convertir directement un rayonnement incident en une charge.

10. Dispositif d'imagerie selon l'une quelconque des revendications précédentes, dans lequel lesdites cellules détectrices sont sensibles à un rayonnement à haute énergie, par exemple des rayons X, et/ou des rayons gamma, et/ou des rayons alpha, et/ou des rayons bêta.

11. Système d'imagerie à balayage comprenant un dispositif d'imagerie selon l'une quelconque des revendications précédentes, et comprenant en outre une électronique de commande (4) destinée à commander ledit dispositif et à lire des informations d'image à partir dudit dispositif d'imagerie, un processeur destiné à traiter lesdites informations d'image en vue d'un affichage, et un moyen d'affichage (5) destiné à afficher lesdites informations traitées.

12. Système d'imagerie à balayage selon la revendication 11, comprenant en outre une source de rayonnement à haute énergie (1) disposée en face dudit dispositif d'imagerie.

13. Système d'imagerie à balayage selon la revendication 12, comprenant en outre un moyen de support destiné audit dispositif d'imagerie et à ladite source de rayonnement à haute énergie et conçu pour déplacer ledit dispositif d'imagerie et ladite source de rayonnement à haute énergie par rapport à un objet disposé entre ledit dispositif d'imagerie et ladite source de rayonnement à haute énergie.

14. Procédé de mise en oeuvre d'un dispositif d'imagerie (6) dans un mode de formation d'image par balayage à intégration à retard dans le temps (TDI), ledit dispositif d'imagerie comprenant un réseau de cellules d'image incluant un réseau (3) de cellules détectrices (11) destinées à engendrer une charge en réponse à un rayonnement incident et un réseau correspondant de circuits de pixels (12) comprenant des circuits d'accumulation (52, 53, 54) destinés à accumuler des valeurs d'images de pixels correspondant à un rayonnement incident sur des cellules détectrices respectives, chaque circuit de pixel étant associé à une cellule détectrice respective et pouvant être commandé pour transférer une valeur d'image de pixel vers un circuit de pixel adjacent, ledit procédé comprenant :
(i) la détermination de ladite charge remplissant un critère prédéterminé et le déclenchement de manière correspondante desdits circuits de comptage en vue du comptage de coups de rayonnement à l'intérieur d'une plage ou de plages d'énergies prédéterminées, et
(ii) la réception d'une valeur d'image de pixel depuis un circuit de pixel adjacent (48).

15. Procédé selon la revendication 14, comprenant le transfert d'une valeur de comptage vers un circuit de pixel suivant et la réception d'une valeur de comptage depuis un circuit de pixel précédent.

16. Procédé selon la revendication 15, comprenant l'initialisation desdits circuits de comptage par ladite valeur de comptage reçue, et l'augmentation de ladite valeur de comptage conformément à un rayonnement incident.

17. Procédé selon l'une quelconque des revendications 14 à 16, comprenant le transfert d'une valeur d'image de pixel depuis ledit circuit de pixel vers un circuit de pixel adjacent.

18. Procédé selon l'une quelconque des revendications 14 à 17, comprenant la modification d'une valeur d'image de pixel reçue conformément à un rayonnement incident sur ladite cellule détectrice associée.
